# EUROPEAN PATENT SPECIFICATION

(11) **EP 1 962 009 B1**
(45) Date of publication and mention of the grant of the patent: **30.03.2011**
(21) Application number: 07002183.7
(22) Date of filing: 01.02.2007
(51) Int. Cl.: F16L 37/091

(54) **Pipe fitting arrangement and method for forming the same**
Rohrfittingsvorrichtung und deren Herstellungsverfahren
Dispositif d'élément de raccord et son procédé de fabrication

(43) Date of publication of application: 27.08.2008
(73) Proprietor: IBP Conex Limited, Tipton West Midlands DY4 7JU (GB)
(72) Inventor: Webb, Steven Paul, Tipton West Midlands DY4 7LX (GB); Glaze, Alan Richard, Marlbrook Worcestershire B63 1EP (GB); Salehi-Bakhtiari, Manouchehr, Cordoba (ES)
(74) Representative: Weber-Bruls, Dorothée

(56) References cited:
- EP-A- 0 751 329
- EP-A- 0 767 337
- WO-A1-2004/046602
- DE-A1- 19 928 025
- FR-A1- 2 622 273

## Description

The present invention refers to a pipe fitting arrangement in line with the preamble of claim 1 and a method for forming said pipe fitting arrangement.

A pipe fitting arrangement is known in particular from WO 2005/114031 A2 and will be discussed in further detail with respect to the enclosed figure 1. Accordingly, a pipe fitting arrangement comprises a housing 100 into which a pipe, not shown, is to be inserted. The housing 100 is provided with a first shoulder 102, having a chamfer 103, a projection 104 defining a second and third shoulder, both being provided with a chamfer 105a, 105b, and a fourth shoulder 106 next to a rolled-over end 108. Between the first shoulder 102 and the projection 104 a sealing ring 110 and between the projection 104 and the rolled-over end 108 a grip ring 112 with internal teeth 114 is provided. Thus, the projection 104 fulfills a plurality of functions, namely by providing a spacer between the sealing ring 110 and the gripping ring 112, limiting the movement of the sealing ring 110 away from the pipe insertion direction, limiting a deformation of the grip ring 112 in the pipe insertion direction and supporting the pipe. The diameter of the opening 109, defined by the rolled-over end 108 and into which the pipe is to be inserted, is larger than the diameter of the projection 104 such that it will not engage the pipe, whereas the teeth 114 are configured to engage the pipe.

As soon as the pipe is inserted into the housing 100 through the opening 109 a seal between the pipe and the housing 100 is obtained by a compression of the sealing ring 110, whereas retention of the pipe within the housing 100 is provided by the engagement of the teeth 114 upon the pipe.

Although the known pipe fitting arrangement has been successfully used up to now, there are still two aspects not having been addressed in a satisfying manner by the same. On the one hand an electric continuity between the pipe and the housing should be ensured and on the other hand a rotation of the housing relative to the pipe should be inhibited, at least restricted. The first aspect, namely the electric continuity, has already been addressed in GB 2 380 532 A by providing a grip ring of a pipe fitting arrangement with a plurality of outwardly directed projections in addition to inwardly directed pipe-gripping teeth.

Thus, it is till desirable to inhibit the degree of rotation of a pipe fitted within the housing of a pipe fitting arrangement. In particular, during installation of pipe-work systems freely rotating joints can be problematic to an installer. Further, certain valves do need to maintain a fixed orientation to present an operating handle to a user and thus require a rotation free pipe fitting arrangement. Still further, orientation of pipe-work that is free to rotate will not hold a desired position and might need additional support during installation.

In addition, WO 2005/114031 A2 teaches to obtain the end 108 by providing the housing 100 with a front edge in form of an open tube and rolling said front edge so that this edge is deformed in order to lie at substantially 90 degrees to the remainder of the housing 100, that is to be disposed diametrically as opposed to axially of the housing 100. This needs the employment of a three wheel rolling head in order to ensure accuracy. The accuracy of the operation or better deformation is in particular critical on two counts, one being that if the grip ring is locked firmly in position with no room for flexure of the flange, this has the effect of making the grip ring rigid, even to such a degree a pipe insertion is not possible any longer. The second effect, which may occur, is the loss of electric continuity between pipe and housing, this also being detrimental to the operation of a pipe fitting arrangement.

According to the preamble of claim 1, WO 2004/046602 A1 discloses a generic pipe fitting arrangement for joining together a pipe and a housing, which comprises a sealing ring and a metallic grip ring. The grip ring has a plurality of radially inwardly extending internal teeth angularly oriented to engage a pipe and prevent its removal from the housing in the inserted state. In order to prevent the pipe from rotating relative to the housing, it is suggested to twist each internal tooth angularly about its longitudinal axis in a direction opposite that of its neighboring teeth and, further, to form a plurality of projections circumferentially around the grip ring, which extend radially outwardly therefrom. Additionally a method for manufacturing a pipe coupling housing is suggested, especially for clamping the grip ring by means of forming a clamping tab at the open end of the housing.

DE 199 28 025 A1 describes a power steering system for automobiles comprising an hydraulic feed line that is to be inserted into a bore of a housing. The bore exhibits an annular recess for accommodating an O-ring that ensures a fluid-tight fastening between the feed line and the housing. The bore also features a second recess at one of its ends which houses a grip ring comprising a plurality of inner and outer teeth for engaging the bore and the tube in order to prevent the feed line from being pulled out of the bore.

FR 2 622 273 A1 teaches to obtain a tube connection system for instantaneously fastening and unfastening a tube in a housing. After its insertion into the housing the tube is held by an elastic O-ring and a metallic grip ring that prevents the tube from being pulled out of the housing. The grip ring comprises a plurality of inner teeth directed towards the tube and a plurality of outer teeth directed towards the housing. The tube can be unfastened by pressing an unfastening member that pushes the inner teeth of the grip ring radially outwardly in order to disengage the outer surface of the tube.

EP 0 767 337 A2 discloses a tubular joint for connecting elastic tubes, which are to be inserted into connection ports of the tubular joint. Each connection port contains an elastic sealing member and a metallic fall-out preventing member. The fall-out preventing member comprises inner teeth directed towards the tube and so-called engaging lags directed outwardly to the inner wall of the connection port.

EP 0 751 329 A1 describes a tube coupling body with an annular socket in which a tube is to be inserted. The annular socket has a grip ring mounted on its outer wall, the grip ring having internal and external teeth. The outer teeth are inclined towards the open end of the socket engaging the inner surface of the outer wall of the socket while the inner teeth of the grip ring being inclined towards the bottom of the socket to engage an outer surface of an inserted tube in for resisting extraction of the tube from the socket.

Therefore, it is an object of the present invention to further develop the known pipe fitting arrangement to overcome the drawbacks of the prior art, in particular in order to ensure electric continuity between the pipe and the housing and to inhibit, at least restrict a relative rotation of the pipe and the housing.

This object is achieved by the features of the characterizing portion of claim 1.

Claims 2 to 17 describe preferred pipe fitting arrangements of the invention.

Also a method for forming a pipe fitting arrangement as described above is provided with claim 18.

Claims 19 to 29 describe preferred embodiments of such a method.

It is the astonishing perception of the invention that a metallic grip ring with internal teeth engaging a pipe and external teeth engaging a housing, which ensure electric continuity, also inhibit a rotation of the pipe relative to the housing by bending the internal teeth opposite the external teeth, namely the internal teeth towards the pipe insertion direction and the external teeth away from the pipe insertion direction.

In order to hold the grip ring within the housing, without effecting the above described functions thereof an encapsulation of the grip ring within the housing is proposed, without employing time consuming and complicated rolling procedures, namely by punching a free end of the housing against the external teeth of the grip ring. This ensures a high accuracy, in particular avoids that the grip ring is locked, distorted or becomes rigid in such an extent that it cannot fulfill its grip ring functions within a pipe fitting arrangement.

The invention will now be further described, by way of example, with reference to the accompanying drawings, in which:

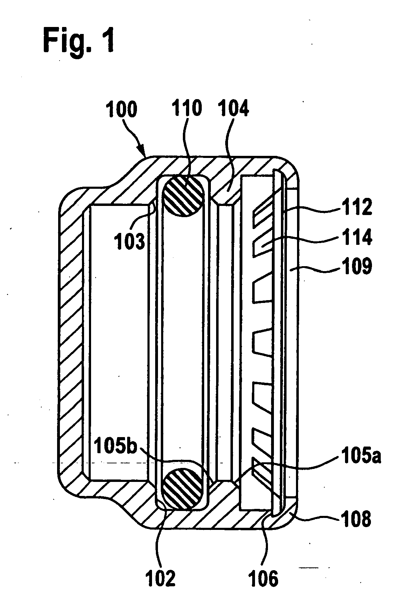

- figure 1: is a longitudinal cross-sectional view of a housing of a known pipe fit- ting arrangement;
- figure 2a: is a part longitudinal cross-sectional view of a housing of a pipe fitting arrangement of the invention, prior to insertion of a pipe;
- figure 2b: is a part longitudinal cross-sectional view of the housing of figure 2a with an inserted tube;
- figure 3a and 3b: are views of a grip ring to be used in a pipe fitting arrangement of fig- ures 2a and 2b;
- figure 4a: is a view of an alternative grip ring to be used in a pipe fitting arrange- ment of the invention, without external teeth shown;
- figure 4b: is a part perspective view of the grip ring of figure 4a on a pipe;
- figure 5a: is a longitudinal cross-sectional view of a housing within a die prior to applying a pressing action by a punch;
- figure 5b: is a longitudinal cross-sectional view corresponding to figure 5a with the punch engaging the die;
- figure 6a: is a part longitudinal cross-sectional view of an alternative arrangement of a housing between a die and a punch; and
- figures 7a to 7c: are part longitudinal cross-sectional views of a housing with a thinned portion at its free end.

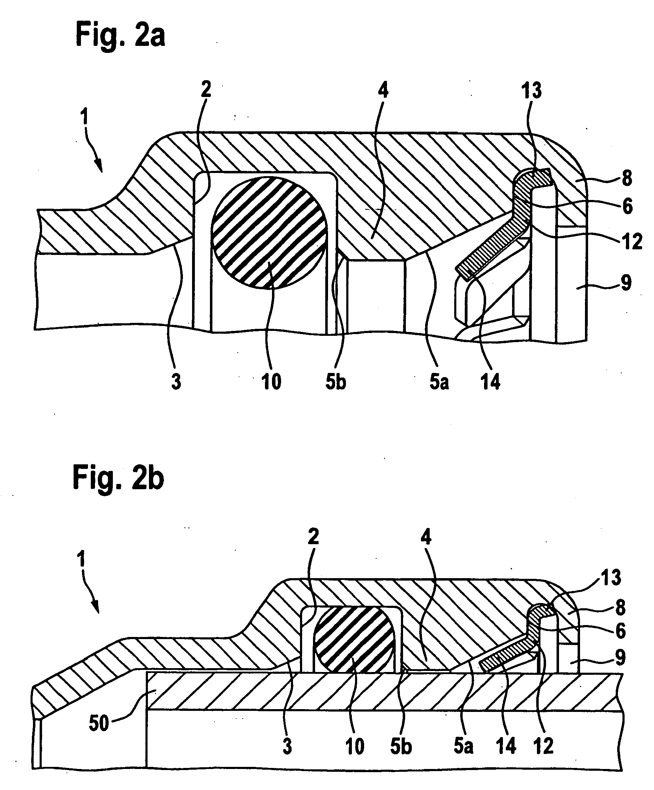

As can be seen from figure 2a, a pipe fitting arrangement of the invention comprises a housing 1 having a first shoulder 2 with a chamfer 3, a projection 4 providing a second shoulder with a chamfer 5b, a third shoulder with a chamfer 5a next to a fourth shoulder 6 and a folded end 8 defining an opening 9. Between the first shoulder 2 and the second shoulder of the projection 4 a sealing ring 10 is arranged, whereas between the fourth shoulder 6 and the folded end 8 a grip ring 12 is arranged. The grip ring 12 comprises first external teeth 13 engaging the housing 1 and second internal teeth 14 engaging a pipe as soon as having been inserted into the housing 1 through the opening 9 as shown in figure 2b, with the movement of the grip ring 12 being limited by the third and fourth shoulder of the projection 4.

Thus, figure 2b is depicting a pipe fitting arrangement with a pipe 50 ensuring a seal due to compressing the sealing ring 10 while abutting in particular against the projection 4, whereas retention of the pipe 50 within the housing 1 is provided by the engagement of the internal teeth 14 of the grip ring 12 on the pipe 50. Still further, a rotation of the pipe 50 relative the housing 1 is inhibited by the opposite orientation of the external and internal teeth 13, 14 of the grip ring 12. The internal teeth 14 engaging the pipe 50 and the external teeth 13 engaging the housing 1 in addition ensure electric continuity between the pipe 50 and the housing 1 as the grip ring 12 is formed from a metal.

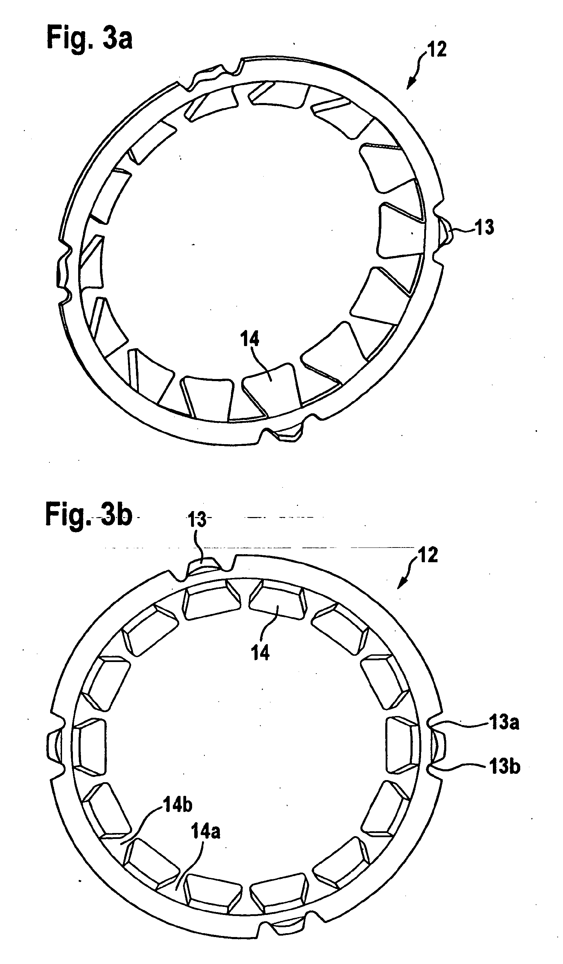

The metallic grip ring 12, shown in detail in figures 3a and 3b, is formed from a flat metallic ring by cutting out triangular recesses 14a, 14b in order to leave the trapezoidal internal teeth 14 which have to be bent in a first direction in order to have a first inclination relative to the original flat ring. In addition, substantial triangular recesses 13a, 13b are cut out to leave the substantially triangular outer teeth 13 which have to be bent in a second direction to have an inclination relative to the original flat ring opposite the first inclination.

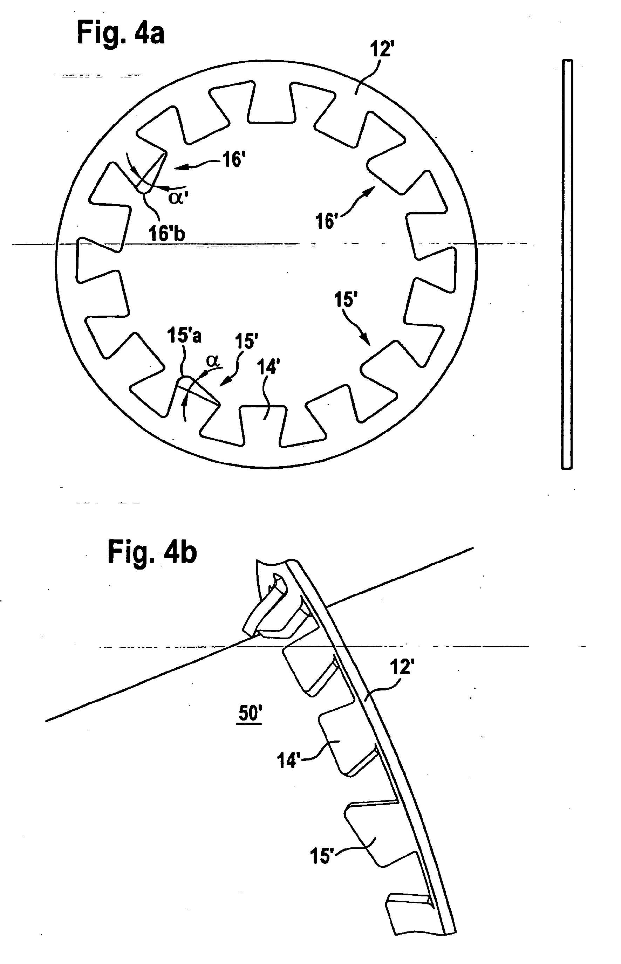

The anti-rotational locking features of the internal teeth 14 can be supplemented by providing additional, differently shaped internal teeth as shown in figures 4a and 4b (having the external teeth omitted for clarity purposes). In particular, figure 4a shows a grip ring 12' after having cut out recesses but prior to applying a bending action. As can be seen, the grip ring 12' comprises three different internal teeth, namely first internal teeth 14' the free ends of which lie on an inner circumference which is concentric to the outer circumference of the grip ring 12, second internal teeth 15' having an edge 15'a extending above said inner circumference defined by the first internal teeth 14' with an angel α and third internal teeth 16' with an edge 16'b extending above said inner circumference defined by the first internal teeth 14' with an angle α'. Thus, the second and third internal teeth 15', 16' are provided with edges 15'a, 16'a having opposing angles in order to inhibit rotation in both clockwise and anti-clockwise direction after having been bent as shown in figure 4b.

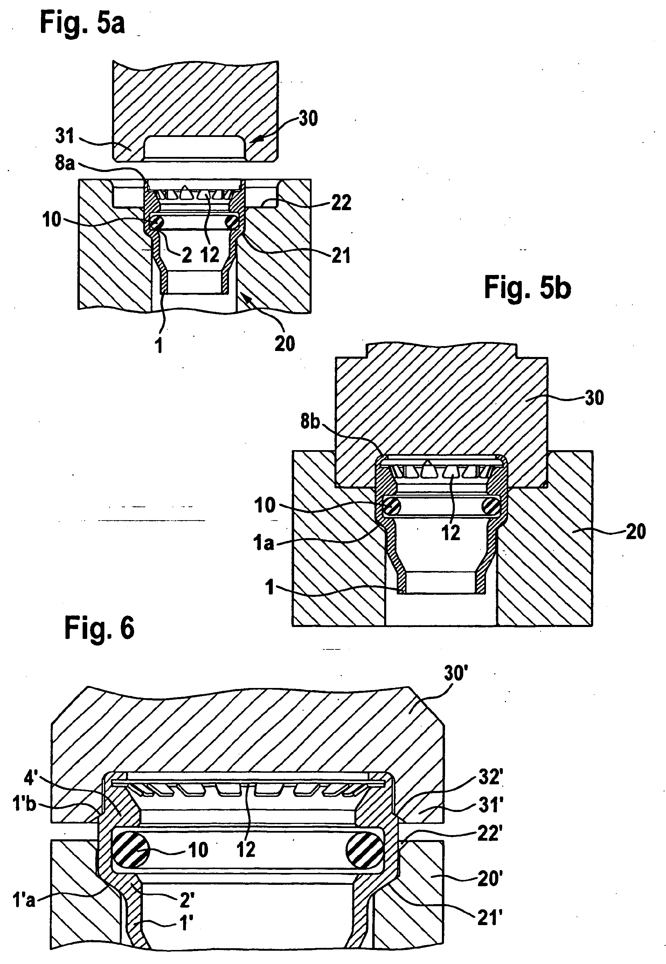

Figures 5a and 5b visualize the forming of the folded edge 8. In particular, figure 5a shows a die 20 having a shoulder 21 provided with a recess 22 to receive the housing 1, said shoulder 21 mating with a step 1b provided on the outer surface of the housing 1 in the region of the first shoulder 2. The housing 1 is originally formed with an open end 8a which will be bent on the grip ring 12, in particular its outer teeth, by striking a punch 30 with a projection 31 to penetrate into the recess 22 of the die 20 against the die 20, as shown in figure 5b. Thus, the die 20 is shaped to provide a support on a selected feature of the outer surface of the housing 1, whereas the punch 30, being axially aligned to the die 20, has an aperture shaped to initially accommodate the free end 8a of the housing 1 and subsequently form the material thereof into the desired final shape and dimensions, i.e. the deformed end 8b. For this purpose, the opposite surfaces of the die 20 and the punch 30 mate each other.

Figure 6 shows a housing 1' with an alternative outer structure having in addition to a first step 1'a to abut against a first shoulder 21' of a die 20' within a recess 22' a second step 1'b to abut against a chamfer 32' of a projection 31' of a punch 30', with the first external step 1'a being arranged in the region of the first internal shoulder 2' and the second external step 1'b being arranged in the region of the projection 4' of the housing 1'.

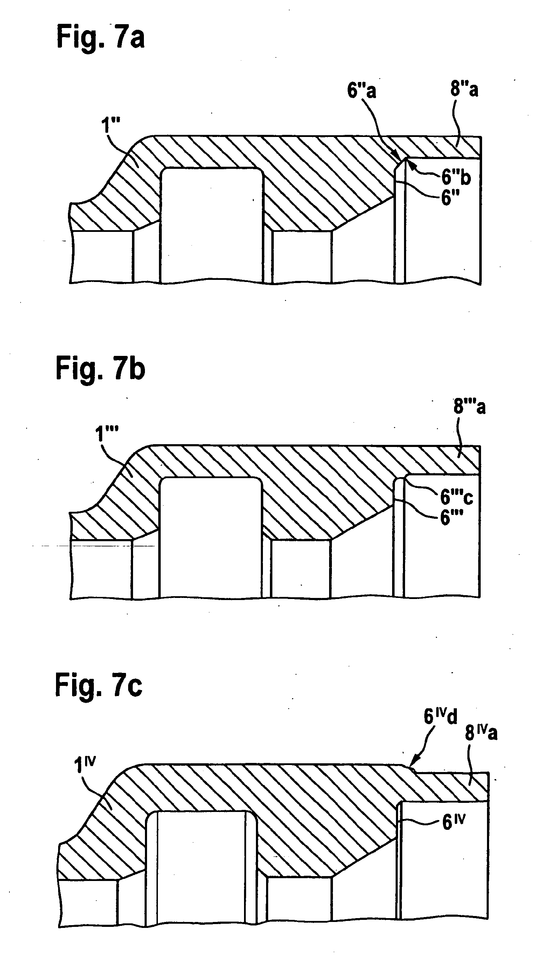

In order to facilitate the striking or punching action and to enhance accuracy thereof, the housing can be provided with a material thinning between the fourth shoulder and the open end. As can be seen in figure 7a the housing 1" might be provided with an internal chamfer 6"a between the shoulder 6'" and the open end 8"a in order to define a bending point 6"b. In line with figure 7b an internal step 6"'c can be arranged between the shoulder 6'" and the open end 8"'a of the housing 1"'. Thus, the alternatives of figures 7a and 7b provide a material thinning from the inside of the housing, whereas figure 7c shows one embodiment with a material thinning from the outside of the housing 1'^{v} via an external step 6'^{v}d opposite the shoulder 6'^{v} and the open end 8'^{v}a. In all three cases shown in figures 7a to 7c a bending point of the open end to optimize the formation of the deformed end is defined by a material thinning.

## Claims

1. Pipe fitting arrangement comprising a pipe (50, 50'), a housing (1, 1', 1", 1"', 1^{IV}) defining at one end an opening (9) for insertion of an end of the pipe (50, 50'), a metallic grip ring (12, 12') and a sealing ring (10, 10') downstream the grip ring (12, 12') in the insertion direction of the pipe (50, 50'), with the grip ring (12, 12') being provided with a first amount of first internal teeth (14, 14') directed toward the pipe (50, 50') in a first direction with a first inclination in the pipe insertion direction for engagement with the pipe (50, 50') and with a second amount of second external teeth (13) directed towards the housing (1, 1', 1", 1"', 1^{IV}) in a second direction, the second direction providing the second external teeth (13) with a second inclination, away from the pipe insertion direction, for engagement with the housing (1, 1', 1", 1"', 1^{IV}),
wherein the location of the grip ring (12,12') between the housing (1, 1', 1", 1"', 1^{IV}) and the pipe (50, 50') is defined by the housing (1, 1', 1", 1"', 1^{IV}) and
the housing is formed with at least three internal shoulders and a deformed end (8), the grip ring abutting against a first of the shoulders and being encapsulated by the deformed end, such that the second teeth (13) of the grip ring (12) are arranged between said first shoulder (6) and the deformed end (8), **characterised in that**
the grip ring is formed from a flat ring by bending or folding the first as well as the second teeth (13), and **in that**
the sealing ring is inserted between a second and third of the at least three shoulders such that the location of the sealing ring (10, 10') between the housing (1, 1', 1", 1"', 1^{IV}) and the pipe (50, 50') is defined by the housing (1, 1', 1", 1"', 1^{IV}).

2. Pipe fitting arrangement according to claim 1, **characterized in that** the first amount of first teeth (14, 14') is larger than the second amount of second teeth (13, 13').

3. Pipe fitting arrangement according to claim 1 or 2, **characterized in that**
the first teeth (14, 14') have a trapezoidal cross-section in a first plane defined by the first direction, preferably with trapezoidal recesses (14a, 14b) between neighbouring first teeth (14, 14').

4. Pipe fitting arrangement according to one of the preceding claims, **characterized in that**
the free inner ends of the first teeth (14, 14') are arranged concentrically relative to the opposite outer ends thereof.

5. Pipe fitting arrangement according to one of the preceding claims, **characterized in that**
the cross-section of each second tooth (13) in a second plane defined by the second direction is triangular, preferably with rounded edges.

6. Pipe fitting arrangement according to one of the preceding claims, **characterized in that**
each second tooth (13) is arranged between two recesses (13a, 13b), preferably having a triangular form, most preferably with rounded edges.

7. Pipe fitting arrangement according to one of the preceding claims, **characterized in that**
the outer free ends of the second teeth (13) are arranged concentrically to the inner free ends of the first teeth (14), preferably within the outer circumference of the grip ring (12).

8. Pipe fitting arrangement according to one of the claims 1 to 6, **characterized by**
an eccentricity between the outer circumference and the inner circumference of the grip ring.

9. Pipe fitting arrangement according to one of the preceding claims, **characterized by**
at least two opposed asymmetric features of the grip ring teeth for inhibiting clockwise and anti-clockwise rotation of the pipe relative to the housing.

10. Pipe fitting arrangement according to claim 9, **characterized in that**
the asymmetric features are provided by at least two additional teeth, either in the form of two internal teeth, two external teeth or one internal and one external tooth.

11. Pipe fitting arrangement according to claim 10, **characterized in that**
the additional teeth comprise a third amount of third internal teeth (15') directed towards the pipe (50') in a third direction with a third inclination towards the pipe insertion direction for engagement with the pipe (50'), each third tooth (15') being provided with a third edge (15'a) extending above an inner circumference defined by the first internal teeth (14'), and
a fourth amount of fourth internal teeth (16') directed towards the pipe (50') in a fourth direction with a fourth inclination towards the pipe insertion direction for engagement with the pipe (50'), each fourth tooth (16') being provided with a fourth edge (16'a) extending above the inner circumference defined by the first internal teeth (14'), with the third and fourth edges (15'a, 16'a) having opposing angles with respect to said internal circumference.

12. Pipe fitting arrangement according to claim 11, **characterized in that**
the cross-section of each third tooth (15') in a third plane defined by the third direction and/or the cross-section of each fourth tooth (16') in a fourth plane defined by the fourth direction is trapezoidal, with preferably each third and each fourth teeth (15', 16') being neighboured by two first teeth (14') with the interposition of a first recess.

13. Pipe fitting arrangement according to claim 11 or 12, **characterized in that**
the third and fourth amount are each smaller than the first amount, preferably also smaller than the second amount, with most preferably the third amount corresponding to the fourth amount.

14. Pipe fitting arrangement according to one of the preceding claims, **characterized in that**
the first direction is opposite the second direction, and/or the first direction, the third direction and the fourth direction correspond to each other.

15. Pipe fitting arrangement according to one of the preceding claims, **characterized in that**
the shoulder (6, 6', 6", 6"', 6^{IV}) against which the grip ring abuts is provided by a projection (4) that forms a pipe support means and/or has a diameter smaller than the opening (9) and/or limits movement of the sealing ring away from the pipe insertion direction.

16. Pipe fitting arrangement according to claim 15, **characterized in that**
the projection (4) is provided with a chamfer (5a) to form a limit for the movement of the first, third and/or fourth teeth (14) of the grip ring (12).

17. Pipe fitting arrangement according to one of the preceding claims, **characterized by** a support tube or liner inserted into the pipe, when the pipe is a plastic pipe.

18. Method for forming a pipe fitting arrangement according to one of the preceding claims, **characterized in that**
the grip ring is formed from a flat ring by bending or folding the first as well as second teeth, the first teeth being bent or folded in the first direction in order to have the first inclination towards the pipe insertion direction and the second teeth being bent or folded in the second direction in order to have the second inclination away from the pipe insertion direction,
the housing is formed with at least three internal shoulders and an open end in order to insert the sealing ring between the first two shoulders and the grip ring abutting against the third shoulder and by thereafter deforming the free end of the housing to encapsulate the grip ring.

19. Method according to claim 18, **characterized in that**
the third and fourth internal teeth are bent or folded in the third and fourth direction, respectively, in order to have the third and fourth inclination relative to the pipe insertion direction, respectively.

20. Method according to claim 18 or 19, **characterized in that**
the first teeth, the second teeth, the third teeth and/or fourth teeth are cut or punched out, machined or cast.

21. Method according to one of claims 18 to 20, **characterized in that**
the first teeth, the third teeth and/or the fourth teeth are trapezoidally formed, with triangular recesses therebetween prior to bending or folding said teeth.

22. Method according to one of claims 18 to 21, **characterized in that**
each second tooth is triangularly formed between two triangular recesses prior to bending or folding said tooth.

23. Method according to one of claims 18 to 22, **characterized in that**
the housing is formed by casting, forging and/or machining and thereafter deforming the free end of the housing to encapsulate the grip ring.

24. Method according to one of claims 18 to 23, **characterized in that**
the housing together with the sealing ring and the grip ring is inserted into a recess within a first surface of a die and a punch with a first surface defining the outer contour of the deformed end of the housing is moved towards the die in order to fold or bend the free end of the housing.

25. Method according to claim 24, **characterized in that**
the first surface of the die mates with the first surface of the punch, the housing being arranged between said first surfaces, preferably one of said first surfaces having at least one recess for receiving therein at least one projection of the other first surface.

26. Method according to claim 24 or 25, **characterized in that**
the housing is formed with at least one feature on its outer surface, like a first outer step, to engage a mating feature within the die for support, and/or the housing is formed with at least one feature on its outer surface, like a second outer step, to engage a mating feature within the punch for support.

27. Method according to one of claims 18 to 26, **characterized in that**
the housing is provided with a thinned region, preferably between the third shoulder and the free end, to define a bending point of the free end prior to its deformation, to the deformed end.

28. Method according to claim 27, **characterized in that**
the thinned region is provided by at least one third outer step and/or outer chamfer, preferably by machining.

29. Method according to claim 27 or 28, **characterized in that**
the thinned region is provided by at least one internal step and/or internal chamfer, preferably by machining.

## Patentansprüche

1. Rohrverbindungsanordnung, umfassend ein Rohr (50, 50^{I}), ein Gehäuse (1, 1^{I}, 1^{II}, 1^{III}, 1^{IV}), das an einer Seite eine Öffnung (9) zur Einführung eines Endes des Rohrs (50, 50^{I}) definiert, einen Metallklemmring (12, 12^{I}) und einen Dichtring (10, 10^{I}), der dem Klemmring (12, 12^{I}) in der Einführrichtung des Rohrs (50, 50^{I}) nachgelagert ist, wobei der Klemmring (12, 12^{I}) mit einer ersten Menge erster innen liegender Zähne (14, 14^{I}), die gegen das Rohr (50, 50^{I}) in einer ersten Richtung mit einer ersten Neigung in der Rohreinführrichtung zum Eingriff in das Rohr (50, 50^{I}) gerichtet sind, und mit einer zweiten Menge zweiter außen liegender Zähne (13), die gegen das Gehäuse (1, 1^{I}, 1^{II}, 1^{III}, 1^{IV}) in einer zweiten Richtung gerichtet sind, bereitgestellt ist, wobei die zweite Richtung die zweiten außen liegenden Zähne (13) mit einer zweiten Neigung entgegen der Rohreinführrichtung zum Eingriff in das Gehäuse (1, 1^{I}, 1^{II}, 1^{III}, 1^{IV}) bereitstellt,
wobei die Anordnung des Klemmrings (12, 12^{I}) zwischen dem Gehäuse (1, 1^{I}, 1^{II}, 1^{III}, 1^{IV}) und dem Rohr (50, 50^{I}) durch das Gehäuse (1, 1^{I}, 1^{II}, 1^{III}, 1^{IV}) definiert ist und das Gehäuse mit mindestens drei innen liegenden Schultern und einem verformten Ende (8) ausgebildet ist, wobei der Klemmring an einer ersten der Schultern anliegt und vom verformten Ende umschlossen ist, so dass die zweiten Zähne (13) des Klemmrings (12) zwischen dieser ersten Schulter (6) und dem verformten Ende (8) angeordnet sind, **dadurch gekennzeichnet,**
**dass** der Klemmring aus einem flachen Ring durch Biegen oder Falzen der ersten und der zweiten Zähne (13) ausgebildet ist und
**dass** der Dichtring zwischen eine zweite und eine dritte der mindestens drei Schultern eingeführt ist, so dass die Anordnung des Dichtrings (10, 10^{I}) zwischen dem Gehäuse (1, 1^{I}, 1^{II}, 1^{III}, 1^{IV}) und dem Rohr (50, 50^{I}) durch das Gehäuse (1, 1^{I}, 1^{II}, 1^{III}, 1^{IV}) definiert ist.

2. Rohrverbindungsanordnung nach Anspruch 1, **dadurch gekennzeichnet,**
**dass** die erste Menge erster Zähne (14, 14^{I}) größer als die zweite Menge zweiter Zähne (13, 13^{I}) ist.

3. Rohrverbindungsanordnung nach Anspruch 1 oder 2, **dadurch gekennzeichnet,**
**dass** die ersten Zähne (14, 14^{I}) in einer durch die erste Richtung definierten ersten Ebene einen trapezförmigen Querschnitt, bevorzugt mit trapezförmigen Aussparungen (14a, 14b) zwischen benachbarten ersten Zähnen (14, 14^{I}), aufweisen.

4. Rohrverbindungsanordnung nach einem der vorherigen Ansprüche, **dadurch gekennzeichnet,**
**dass** die freien inneren Enden der ersten Zähne (14, 14^{I}) konzentrisch zu den gegenüberliegenden äußeren Enden derselben angeordnet sind.

5. Rohrverbindungsanordnung nach einem der vorherigen Ansprüche, **dadurch gekennzeichnet,**
**dass** der Querschnitt jedes zweiten Zahns (13) in einer durch die zweite Richtung definierten zweiten Ebene dreieckig, bevorzugt mit abgerundeten Ecken, ist.

6. Rohrverbindungsanordnung nach einem der vorherigen Ansprüche, **dadurch gekennzeichnet,**
**dass** jeder zweite Zahn (13) zwischen zwei Aussparungen (13a, 13b) angeordnet ist und bevorzugt eine dreieckige Form, besonders bevorzugt mit abgerundeten Ecken, aufweist.

7. Rohrverbindungsanordnung nach einem der vorherigen Ansprüche, **dadurch gekennzeichnet,**
**dass** die äußeren freien Enden der zweiten Zähne (13) konzentrisch zu den inneren freien Enden der ersten Zähne (14), bevorzugt innerhalb des Außenumfangs des Klemmrings (12), angeordnet sind.

8. Rohrverbindungsanordnung nach einem der Ansprüche 1 bis 6, **gekennzeichnet durch** eine Exzentrizität zwischen dem Außen- und dem Innenumfang des Klemmrings.

9. Rohrverbindungsanordnung nach einem der vorherigen Ansprüche, **gekennzeichnet durch**
mindestens zwei gegenüberliegende asymmetrische Merkmale der Klemmringzähne, um eine Drehung des Rohrs gegen das Gehäuse im Uhrzeigersinn oder gegen den Uhrzeigersinn zu verhindern.

10. Rohrverbindungsanordnung nach Anspruch 9, **dadurch gekennzeichnet, dass** die asymmetrischen Merkmale durch mindestens zwei zusätzliche Zähne mit der Form zweier innen liegender Zähne, zweier außen liegender Zähne oder eines innen liegenden und eines außen liegenden Zahns bereitgestellt sind.

11. Rohrverbindungsanordnung nach Anspruch 10, **dadurch gekennzeichnet, dass** die zusätzlichen Zähne eine dritte Menge dritter innen liegender Zähne (15^{I}) umfasst, die gegen das Rohr (50^{I}) in einer dritten Richtung mit einer dritten Neigung in der Rohreinführrichtung zum Eingriff in das Rohr (15^{I}) gerichtet sind, wobei jeder dritte Zahn (15^{I}) mit einer dritten Ecke (15^{I}a) bereitgestellt ist, die über einen durch die ersten innen liegenden Zähne (14^{I}) definierten Innenumfang hinausragt,
und eine vierte Menge vierter innen liegender Zähne (16^{I}) umfasst, die gegen das Rohr (50^{I}) in einer vierten Richtung mit einer vierten Neigung in der Rohreinführrichtung zum Eingriff in das Rohr (50^{I}) gerichtet sind, wobei jeder vierte Zahn (16^{I}) mit einer vierten Ecke (16^{I}a) bereitgestellt ist, die über den durch die ersten innen liegenden Zähne (14^{I}) definierten inneren Umfang hinausragt, wobei die dritten und vierten Ecken (15^{I}a, 16^{I}a) entgegengesetzte Winkel in Bezug auf den innen liegenden Umfang haben.

12. Rohrverbindungsanordnung nach Anspruch 11, **dadurch gekennzeichnet, dass** der Querschnitt jedes dritten Zahns (15^{I}) in einer durch die dritte Richtung definierten dritten Ebene und/oder der Querschnitt jedes vierten Zahns (16^{I}) in einer durch die vierte Richtung definierten vierten Ebene trapezförmig ist, wobei bevorzugt alle dritten und vierten Zähne (15^{I}, 16^{I}) durch zwei erste Zähne (14^{I}) mit einer dazwischen liegenden ersten Aussparung benachbart sind.

13. Rohrverbindungsanordnung nach Anspruch 11 oder 12, **dadurch gekennzeichnet, dass** die dritte und vierte Menge jeweils kleiner als die erste Menge und bevorzugt auch kleiner als die zweite Menge sind, wobei besonders bevorzugt die dritte Menge der vierten Menge entspricht.

14. Rohrverbindungsanordnung nach einem der vorherigen Ansprüche, **dadurch gekennzeichnet, dass**
die erste Richtung der zweiten Richtung entgegengesetzt ist und/oder die erste Richtung, die dritte Richtung und die vierte Richtung einander entsprechen.

15. Rohrverbindungsanordnung nach einem der vorherigen Ansprüche, **dadurch gekennzeichnet, dass**
die Schulter (6, 6^{I}, 6^{II}, 6^{III}, 6^{IV}), an der der Klemmring anliegt, durch eine Auskragung (4) bereitgestellt ist, die eine Rohrhalterung darstellt und/oder einen kleineren Durchmesser als die Öffnung (9) aufweist und/oder die Bewegung des Dichtrings entgegen der Rohreinführrichtung begrenzt.

16. Rohrverbindungsanordnung nach Anspruch 15, **dadurch gekennzeichnet, dass** die Auskragung (4) mit einer Abschrägung (5a) bereitgestellt ist, um für die Bewegung der ersten, dritten und/oder vierten Zähne (14) des Klemmrings (12) eine Grenze zu bilden.

17. Rohrverbindungsanordnung nach einem der vorherigen Ansprüche, **gekennzeichnet durch**
eine in das Rohr eingeführte Stütztülle oder Stützhülse, wobei das Rohr ein Kunststoffrohr ist.

18. Verfahren zum Ausbilden einer Rohrverbindungsanordnung nach einem der vorherigen Ansprüche, **dadurch gekennzeichnet, dass**
der Klemmring aus einem flachen Ring durch Biegen oder Falzen der ersten und der zweiten Zähne ausgebildet ist, wobei die ersten Zähne in der ersten Richtung gebogen bzw. gefalzt werden, um die erste Neigung in der Rohreinführrichtung zu erhalten, und die zweiten Zähne in der zweiten Richtung gebogen bzw. gefalzt werden, um die zweite Neigung entgegen der Rohreinführrichtung zu erhalten,
das Gehäuse mit mindestens drei innen liegenden Schultern und einem offenen Ende ausgebildet ist, um den Dichtring zwischen die ersten beiden Schultern und den an der dritten Schulter anliegenden Klemmring einzuführen und anschließend das freie Gehäuseende zu verformen, um den Klemmring zu umschließen.

19. Verfahren nach Anspruch 18, **dadurch gekennzeichnet, dass** die dritten und vierten innen liegenden Zähne jeweils in die dritte bzw. vierte Richtung gebogen bzw. gefalzt werden, um jeweils die dritte und vierte Neigung in Bezug auf die Rohreinführrichtung zu erhalten.

20. Verfahren nach Anspruch 18 oder 19, **dadurch gekennzeichnet, dass**
die ersten Zähne, die zweiten Zähne, die dritten Zähne und/oder die vierten Zähne ausgestanzt oder ausgeschnitten, gespant oder gegossen sind.

21. Verfahren nach einem der Ansprüche 18 bis 20, **dadurch gekennzeichnet, dass** die ersten Zähne, die dritten Zähne und/oder die vierten Zähne vor dem Biegen bzw. Falzen derselben trapezförmig mit dazwischen liegenden dreieckigen Aussparungen ausgeführt sind.

22. Verfahren nach einem der Ansprüche 18 bis 21, **dadurch gekennzeichnet, dass** jeder zweite Zahn vor dem Biegen bzw. Falzen desselben zwischen zwei dreieckigen Aussparungen dreieckig ausgebildet ist.

23. Verfahren nach einem der Ansprüche 18 bis 22, **dadurch gekennzeichnet, dass**
das Gehäuse durch Gießen, Schmieden und/oder Spanen und anschließendes Verformen des freien Gehäuseendes, um den Klemmring zu umschließen, ausgebildet ist.

24. Verfahren nach einem der Ansprüche 18 bis 23, **dadurch gekennzeichnet, dass**
das Gehäuse zusammen mit dem Dichtring und dem Klemmring in eine Aussparung innerhalb einer ersten Oberfläche einer Platte eingeführt wird und
eine Stanze mit einer ersten Oberfläche, die die Außenkontur des verformten Gehäuseendes definiert, in Richtung der Platte bewegt wird, um das freie Gehäuseende zu biegen bzw. zu falzen.

25. Verfahren nach Anspruch 24, **dadurch gekennzeichnet, dass**
die erste Oberfläche der Platte und die erste Oberfläche der Stanze ein Paar bilden,
wobei das Gehäuse zwischen den ersten Oberflächen angeordnet ist, wobei bevorzugt eine der ersten Oberflächen mindestens eine Aussparung zum Aufnehmen mindestens einer Auskragung der anderen ersten Oberfläche aufweist.

26. Verfahren nach Anspruch 24 oder 25, **dadurch gekennzeichnet, dass** das Gehäuse an seiner äußeren Oberfläche mit mindestens einem Merkmal, wie einer ersten äußeren Stufe, ausgebildet ist, um zur Halterung in ein Paarungsmerkmal innerhalb der Platte zu greifen und/oder das Gehäuse an seiner äußeren Oberfläche mit mindestens einem Merkmal, wie einer zweiten äußeren Stufe, ausgebildet ist, um zur Halterung in ein passendes Merkmal innerhalb der Stanze zu greifen.

27. Verfahren nach einem der Ansprüche 18 bis 26, **dadurch gekennzeichnet, dass** das Gehäuse mit einem verdünnten Bereich, bevorzugt zwischen der dritten Schulter und dem freien Ende, bereitgestellt ist, um einen Biegepunkt des freien Endes vor dessen Verformung zum verformten Ende zu definieren.

28. Verfahren nach Anspruch 27, **dadurch gekennzeichnet, dass** der verdünnte Bereich durch mindestens eine dritte äußere Stufe und/oder äußere Abschrägung, bevorzugt durch Spanen, bereitgestellt ist.

29. Verfahren nach Anspruch 27 oder 28, **dadurch gekennzeichnet, dass** der verdünnte Bereich durch mindestens eine innen liegende Stufe und/oder innen liegende Abschrägung, bevorzugt durch Spanen, bereitgestellt ist.

## Revendications

1. Agencement de raccord de tuyauterie comprenant un tuyau (50, 50'), un boîtier (1, 1', 1", 1"', I^{iv}) définissant au niveau d'une extrémité une ouverture (9) pour l'insertion d'une extrémité du tuyau (50, 50'), un collier de serrage métallique (12, 12') et une bague d'étanchéité (10, 10') en aval du collier de serrage (12, 12') dans la direction d'insertion du tuyau (50, 50'), le collier de serrage (12, 12') étant muni d'une première quantité de premières dents internes (14, 14') dirigées vers le tuyau (50, 50') dans une première direction avec une première inclinaison dans la direction d'insertion du tuyau en vue d'une mise en prise avec le tuyau (50, 50'), et d'une seconde quantité de secondes dents externes (13) dirigées vers le boîtier (1, 1', 1", 1"', 1^{iv}) dans une seconde direction, la seconde direction fournissant les secondes dents externes (13) avec une deuxième inclinaison, loin de la direction d'insertion du tuyau, en vue d'une mise en prise avec le boîtier (1, 1', 1", 1"', 1^{iv}),
dans lequel l'emplacement du collier de serrage (12, 12') entre le boîtier (1, 1', 1", 1 "', 1^{iv}) et le tuyau (50, 50') est défini par le boîtier (1, 1', 1", 1"', i^{iv}) et
le boîtier est formé d'au moins trois épaulements internes et d'une extrémité déformée (8), le collier de serrage venant en butée contre un premier des épaulements et étant encapsulé par l'extrémité déformée, de sorte que les secondes dents (13) du collier de serrage (12) sont agencées entre ledit premier épaulement (6) et l'extrémité déformée (8), **caractérisé en ce que**
le collier de serrage est formé à partir d'une bague plate en incurvant ou en pliant les premières ainsi que les secondes dents (13), et **en ce que**
la bague d'étanchéité est insérée entre un deuxième et un troisième épaulements parmi les au moins trois épaulements, de sorte que l'emplacement de la bague d'étanchéité (10, 10') entre le boîtier (1, 1', 1", 1'", 1^{iv}) et le tuyau (50, 50') est défini par le boîtier (1, 1', 1", 1"', 1^{iv}).

2. Agencement de raccord de tuyauterie selon la revendication 1, **caractérisé en ce que**
la première quantité de premières dents (14, 14') est supérieure à la deuxième quantité de deuxièmes dents (13, 13').

3. Agencement de raccord de tuyauterie selon la revendication 1 ou 2, **caractérisé en ce que**
les premières dents (14, 14') ont une coupe transversale trapézoïdale dans un premier plan défini par la première direction, de préférence avec des évidements trapézoïdaux (14a, 14b) entre les premières dents voisines (14, 14').

4. Agencement de raccord de tuyauterie selon l'une quelconque des revendications précédentes, **caractérisé en ce que**
les extrémités internes libres des premières dents (14, 14') sont agencées de manière concentrique par rapport à leurs extrémités externes opposées.

5. Agencement de raccord de tuyauterie selon l'une quelconque des revendications précédentes, **caractérisé en ce que**
la coupe transversale de chaque deuxième dent (13) dans un second plan défini par la seconde direction est triangulaire, de préférence avec des bords arrondis.

6. Agencement de raccord de tuyauterie selon l'une quelconque des revendications précédentes, **caractérisé en ce que**
chaque deuxième dent (13) est agencée entre deux évidements (13a, 13b), ayant de préférence une forme triangulaire, de manière la plus préférée avec des bords arrondis.

7. Agencement de raccord de tuyauterie selon l'une quelconque des revendications précédentes, **caractérisé en ce que**
les extrémités libres externes des deuxièmes dents (13) sont agencées de manière concentrique sur les extrémités libres internes des premières dents (14), de préférence dans la circonférence externe du collier de serrage (12).

8. Agencement de raccord de tuyauterie selon l'une quelconque des revendications 1 à 6, **caractérisé par**
une excentricité entre la circonférence externe et la circonférence interne du collier de serrage.

9. Agencement de raccord de tuyauterie selon l'une quelconque des revendications précédentes, **caractérisé par**
au moins deux formes asymétriques opposées des dents du collier de serrage pour empêcher une rotation dans le sens des aiguilles d'une montre et dans le sens inverse des aiguilles d'une montre du tuyau par rapport au boîtier.

10. Agencement de raccord de tuyauterie selon la revendication 9, **caractérisé en ce que**
les formes asymétriques sont constituées par au moins deux dents supplémentaires, sous la forme de deux dents internes, de deux dents externes ou d'une dent interne et d'une dent externe.

11. Agencement de raccord de tuyauterie selon la revendication 10, **caractérisé en ce que**
les dents supplémentaires comprennent une troisième quantité de troisièmes dents internes (15') dirigées vers le tuyau (50') dans une troisième direction avec une troisième inclinaison vers la direction d'insertion de tuyau en vue d'une mise en prise avec le tuyau (50'), chaque troisième dent (15') étant munie d'un troisième bord (15'a) s'étendant au-dessus d'une circonférence interne définie par les premières dents internes (14'), et
une quatrième quantité de quatrièmes dents internes (16') dirigées vers le tuyau (50') dans une quatrième direction avec une quatrième inclinaison vers la direction d'insertion du tuyau en vue d'une mise en prise avec le tuyau (50'), chaque quatrième dent (16') étant munie d'un quatrième bord (16'a) s'étendant au-dessus de la circonférence interne définie par les premières dents internes (14'), les troisième et quatrième bords (15'a, 16'a) ayant des angles opposés par rapport à ladite circonférence interne.

12. Agencement de raccord de tuyauterie selon la revendication 11, **caractérisé en ce que**
la coupe transversale de chaque troisième dent (15') dans un troisième plan défini par la troisième direction et/ou la coupe transversale de chaque quatrième dent (16') dans un quatrième plan défini par la quatrième direction est trapézoïdale, chaque troisième et quatrième dent (15', 16') étant de préférence au voisinage des deux premières dents (14') avec l'interposition d'un premier évidement.

13. Agencement de raccord de tuyauterie selon la revendication 11 ou 12, **caractérisé en ce que**
la troisième et la quatrième quantités sont chacune inférieure à la première quantité, de préférence également inférieure à la deuxième quantité, de la manière la plus préférée la troisième quantité correspondant à la quatrième quantité.

14. Agencement de raccord de tuyauterie selon l'une quelconque des revendications précédentes, **caractérisé en ce que**
la première direction est opposée à la deuxième direction, et/ou la première direction, la troisième direction correspondant à la quatrième direction.

15. Agencement de raccord de tuyauterie selon l'une quelconque des revendications précédentes, **caractérisé en ce que**
l'épaulement (6, 6', 6", 6"', 6^{iv}) contre lequel le collier de serrage vient en butée est assuré par une saillie (4) qui forme un moyen de support de tuyau et/ou a un diamètre inférieur à l'ouverture (9) et/ou limite le déplacement de la bague d'étanchéité loin de la direction d'insertion du tuyau.

16. Agencement de raccord de tuyauterie selon la revendication 15, **caractérisé en ce que**
la saillie (4) est dotée d'un chanfrein (5a) afin de former une limite pour le déplacement des premières, troisièmes et/ou quatrièmes dents (14) du collier de serrage (12).

17. Agencement de raccord de tuyauterie selon l'une quelconque des revendications précédentes, **caractérisé par** un tube de support ou un revêtement intérieur inséré dans le tuyau, lorsque le tuyau est un tuyau en plastique.

18. Procédé pour former un agencement de raccord de tuyauterie selon l'une quelconque des revendications précédentes, **caractérisé en ce que**
le collier de serrage est formé à partir d'une bague plate en incurvant ou en pliant les premières ainsi que les deuxièmes dents, les premières dents étant incurvées ou pliées dans la première direction afin d'avoir la première inclinaison vers la direction d'insertion du tuyau, et les deuxièmes dents étant incurvées ou pliées dans la deuxième direction afin d'avoir la deuxième inclinaison loin de la direction d'insertion du tuyau,
le boîtier est formé d'au moins trois épaulements internes et d'une extrémité ouverte afin d'insérer la bague d'étanchéité entre les deux premiers épaulements et le collier de serrage venant en butée contre le troisième épaulement, et en déformant par la suite l'extrémité libre du boîtier afin d'encapsuler le collier de serrage.

19. Procédé selon la revendication 18, **caractérisé en ce que**
les troisième et quatrième dents internes sont incurvées ou pliées dans la troisième et quatrième direction, respectivement, afin d'avoir la troisième et la quatrième inclinaison par rapport à la direction d'insertion du tuyau, respectivement.

20. Procédé selon la revendication 18 ou 19, **caractérisé en ce que**
les premières dents, les deuxièmes dents, les troisièmes dents et/ou les quatrièmes dents sont découpées ou perforées, usinées ou coulées.

21. Procédé selon l'une quelconque des revendications 18 à 20, **caractérisé en ce que**
les premières dents, les troisièmes dents et/ou les quatrièmes dents sont formées de manière trapézoïdale, avec des évidements triangulaires au milieu avant d'incurver ou de plier lesdites dents.

22. Procédé selon l'une quelconque des revendications 18 à 21, **caractérisé en ce que** chaque deuxième dent est formée de manière triangulaire entre deux évidements triangulaires avant d'incurver ou de plier lesdites dents.

23. Procédé selon l'une quelconque des revendications 18 à 22, **caractérisé en ce que** le boîtier est formé en coulant, en forgeant et/ou en usinant, et par la suite en déformant l'extrémité libre du boîtier afin d'encapsuler le collier de serrage.

24. Procédé selon l'une quelconque des revendications 18 à 23, **caractérisé en ce que** le boîtier ainsi que la bague d'étanchéité et le collier de serrage sont insérés dans un évidement dans une première surface d'une matrice et un poinçon doté d'une première surface définissant le contour externe de l'extrémité déformée du boîtier est déplacé vers la matrice afin de plier ou d'incurver l'extrémité libre du boîtier.

25. Procédé selon la revendication 24, **caractérisé en ce que** la première surface de la matrice s'apparie avec la première surface du poinçon, le boîtier étant agencé entre lesdites premières surfaces, de préférence une desdites premières surfaces ayant au moins un évidement afin de recevoir à l'intérieur au moins une saillie de l'autre première surface.

26. Procédé selon la revendication 24 ou 25, **caractérisé en ce que** le boîtier est formé avec au moins une forme sur sa surface externe, comme un premier étage externe, pour venir en prise avec une forme d'appariement dans la matrice pour un support, et/ou le boîtier est formé avec au moins une forme sur sa surface externe, comme un deuxième étage externe, pour venir en prise avec une forme d'appariement dans le poinçon pour un support.

27. Procédé selon l'une quelconque des revendications 18 à 26, **caractérisé en ce que** le boîtier est doté d'une région rétrécie, de préférence entre le troisième épaulement et l'extrémité libre, afin de définir un point d'incurvation de l'extrémité libre avant sa déformation, vers l'extrémité déformée.

28. Procédé selon la revendication 27, **caractérisé en ce que**
la région rétrécie est constituée par au moins un troisième étage externe et/ou un chanfrein externe, de préférence par usinage.

29. Procédé selon la revendication 27 ou 28, **caractérisé en ce que**
la région rétrécie est constituée par au moins un étage interne et/ou un chanfrein interne, de préférence par usinage.
